# EUROPEAN PATENT APPLICATION

(11) **EP 1 777 429 A2**
(43) Date of publication of application: **25.04.2007**
(21) Application number: 06254709.6
(22) Date of filing: 09.09.2006
(51) Int. Cl.: F16D 41/30

(54) **Bicycle freewheel**

(30) Priority: 21.10.2005 JP 2005306679
(71) Applicant: SHIMANO INC., Osaka 590-8577 (JP)
(72) Inventor: Kanehisa, Takanori, Sakai City Osaka 590-8577 (JP)
(74) Representative: Murnane, Graham John

(57) **Abstract**

A freewheel (43) has an inner tubular member (50), an outer tubular member (51), a pair of bearing assemblies (52) and a one-way clutch (53). The bearing assemblies (52) are arranged between the inner and outer members to rotatably couple the outer tubular member (51) to the inner tubular member (50). The one-way clutch (53) has internal ratchet teeth provided on the outer tubular member (51), at least three clutch pawls (61) provided in a circumferential direction on the inner tubular member (50), and at least one spring (62a) applying a force against the clutch pawls (61) in a direction oriented away from the inner tubular member (50) to an engagement position. The spring (62a) forms a closed circular ring than runs in the circumferential direction of the inner tubular member (50) and is configured to elongate and contract in the circumferential direction. The clutch pawls (61) are arranged with an angle of lost motion of the freewheel (43) being 5° or less.

## Description

### CROSS-REFERENCE TO RELATED APPLICATIONS

This application claims priority under 35 U.S.C. §119 to Japanese Patent Application No. 2005-306679. The entire disclosure of Japanese Patent Application No. 2005-306679 is hereby incorporated herein by reference.

### BACKGROUND OF THE INVENTION

This invention generally relates to a bicycle freewheel to be mounted to a hub of a bicycle. More specifically, the present invention relates to a bicycle freewheel with a one-way clutch in which the lost motion of the one-way clutch is minimized.

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. The bicycle drive train has been extensively redesigned.

In many bicycles with multiple speeds, a wheel of the bicycle, typically the rear wheel, is provided with a freewheel that is arranged on a hub of the wheel. The freewheel is arranged either as an integral part of the hub body or as a separate member. The freewheel usually has a one-way clutch function whereby it only transfers torque in one direction. One well-known conventional type of freewheel is provided with a pawl-type one-way clutch that includes ratchet teeth and clutch pawls configured to mesh with the ratchet teeth. In pawl-type one-way clutches, the clutch pawls are forced (spring loaded) toward engaging positions where they mesh with the ratchet teeth. Pawl-type one-way clutches have a characteristic called an "angle of lost motion" which indicates the timing delay with which the clutch pawls reach the engagement angle and mesh with the ratchet teeth. For example, if there is one clutch pawl and the angular distance between adjacent ratchet teeth (i.e., the angular pitch of the ratchet teeth) is 20°, then a maximum possible angle of lost motion of 20° exists between the current position and the position where the clutch pawl meshes with the ratchet tooth.

There is a demand for reducing the angle of lost motion of the one-way clutch as much as possible in the case of road racing bicycles, mountain bikes, and other competition oriented bicycles that are used under such severe conditions as rapid acceleration, extreme variations of the slope of the riding surface, and sharp cornering. Competition oriented bicycles used under severe conditions also require a freewheel that can withstand large loads because the freewheels of such bicycles are subjected to conditions that require a high degree of strength and a high resistance to impact. There are known freewheel configurations that have a small angle of lost motion and satisfy the aforementioned strength requirements (e.g., European Patent Application Publication No. 0777060).

A conventional freewheel structure is disclosed in European Patent Application Publication No. 0777060 (see, Figure 5) that comprises a one-way transmission mechanism having an outside member coupled to a hub body in such a fashion that it can rotate integrally (i.e., as an integral unit) with the hub body, an inside member that is arranged inside the outside member and configured such that a rear sprocket can be mounted on the external circumference thereof, and a pawl-type one-way clutch arranged between the inside member and the outside member. The one-way clutch is provided with a plurality of clutch pawls that are arranged and configured to have an angular phase difference with respect to the ratchet teeth. A force applying member applies forces against the clutch pawls in such directions as to urge the clutch pawls to mesh with the ratchet teeth. The force applying member is made of a metal wire-like material having a spring-like quality that has been bent into a C-shape. The force applying member is arranged so as to apply forces to a plurality of clutch pawls simultaneously.

In such conventional freewheels, the clutch pawls are arranged such that the clutch pawls are spaced apart in the circumferential direction so as to have an angular phase difference with respect to the ratchet teeth. As a result, the clutch pawls are enabled to mesh with the ratchet teeth after moving through a smaller rotational angle than the angular pitch of the ratchet teeth. In other words, the angle of lost motion is reduced and the angular interval traversed in order for the clutch pawls to mesh with the ratchet teeth is shortened.

With the conventional one-way transmission mechanism described above, the angle of lost motion is reduced and the engagement timing of the one-way clutch is shortened (i.e., made faster). However, since all of the clutch pawls are forced (spring loaded) with a single C-shaped force applying member, the forces applied against the clutch pawls by the force applying member become weaker when the clutch pawls are arranged closer together along the circumferential direction. More specifically, when a C-shaped force applying member is used, the force applied varies according to the amount of separation from the internal circumferential surface. When the clutch pawls are arranged close together, there is the possibility that the forces applied to the clutch pawls, particularly the two clutch pawls located in the vicinity of the middle of the force applying member, will become weak. Consequently, when a plurality of clutch pawls are to be arranged along the circumferential direction, there is the possibility that it will not be possible to arranged the clutch pawls in the desired positions and the arrangement options of the clutch pawls will be limited.

In view of the above, it will be apparent to those skilled in the art from this disclosure that there exists a need for an improved bicycle freewheel. This invention addresses this need in the art as well as other needs, which will become apparent to those skilled in the art from this disclosure.

### SUMMARY OF THE INVENTION

One object of the present invention is to provide a bicycle freewheel having a plurality of clutch pawls arranged between an inner tubular member and an outer tubular member that alleviates the limitations on the clutch pawl arrangement in a freewheel.

In accordance with a first aspect of the present invention, there is provided a bicycle freewheel that comprises an inner tubular member, an outer tubular member, at least one bearing assembly and a one-way clutch. The inner tubular member is configured to be couplable to a bicycle hub. The outer tubular member is arranged around an outer side circumference of the inner tubular member. The at least one bearing assembly is disposed between the inner tubular member and the outer tubular member to couple the outer tubular member to the inner tubular member in a rotatable manner such that the outer tubular member is freely rotatable with respect to the inner tubular member. The one-way clutch includes a plurality of ratchet teeth, at least three clutch pawls and at least one force applying members. The ratchet teeth are provided on an internal circumferential surface of the outer tubular member. The at least three clutch pawls are circumferentially spaced apart around the outer side circumference of the inner tubular member and each freely movable between an engagement position in which the clutch pawls engage the ratchet teeth to transmit torque from the outer tubular member to the inner tubular member and a disengagement position in which the clutch pawls are disengaged from the ratchet teeth. The at least one force applying member is operable to simultaneously apply a force against at least a portion of the clutch pawls in such directions as to urge the clutch pawls toward the engagement positions. The at least one force applying member comprises a closed circular ring-shaped member than runs in a circumferential direction of the inner tubular member such that at least a portion of the at least one force applying member elongates and contracts in the circumferential direction during movement of the clutch pawls. The clutch pawls are arranged such that an angle of lost motion of the freewheel is 5° or less.

With this freewheel, when the outside member rotates, it rotates 5° or less before a clutch pawl urged toward the engagement position by the circular ring-shaped force applying member meshes with a ratchet tooth. Then, the rotation of the outside member is transmitted to the inside member through the clutch pawl and the hub, i.e., the wheel, rotates. Since the force applying member is shaped like a circular ring and at least a portion thereof can elongate and contract in the circumferential direction, the clutch pawls can be urged toward their engagement positions using the elongation and contraction of the force applying member by arranging the force applying member such that the portion that elongates and contracts applies forces to the clutch pawls. Thus, each clutch pawl can be urged toward the engagement position individually by the elongation and contraction of the force applying member even if the clutch pawls are arranged close together. As a result, the limitations on the clutch pawl arrangement can be alleviated.

Preferably the force applying member is an elastic member that elongates and contracts in the circumferential direction along substantially all portions of the elastic member during movement of the clutch pawls. With this freewheel, since the entire force applying member can elongate and contract, the limitations on the clutch pawl arrangement are alleviated even further.

Preferably the elastic member is a coil spring mounted along the circumferential direction with both ends being connected together. With this freewheel, the force exerted by the force applying member can be set optimally in accordance with the number of clutch pawls because the diameter of the wire stock from which the coil spring is made and the number of turns of the coil spring can be easily adjusted.

Preferably the at least one force applying member includes a first force applying member and a second force applying member, with the first and second force applying members being arranged to apply forces to alternate ones of the clutch pawls, respectively. With this bicycle freewheel, the forces applied by the force applying members can be stabilized even when the number of clutch pawls is large because the clutch pawls can be divided into two groups, each group being forced by a different force applying member. As a result, the plurality of clutch pawls can be urged toward the engagement position in a stable manner.

Preferably each of the clutch pawls includes a claw-like part configured to selectively mesh with the ratchet teeth, and a spring engaging part arranged on a side of the claw-like part and engageable with one of the first and second force applying members, with the spring engaging parts of adjacent ones of the clutch pawls being provided on opposite sides of respective ones of the claw-like parts. With this bicycle freewheel, the forces applied by the force applying members are stabilized and the degree of freedom regarding the design of the claw-like parts is increased.

Preferably two adjacent clutch pawls are angularly spaced apart by a first angular distance that is larger than other angular distances between any other adjacent pair of the clutch pawls among the clutch pawls. With this bicycle freewheel, the angular distance between the first clutch pawl and the last (n^{th}) clutch pawl is larger than the angular distance between any other pair of adjacent clutch pawls. As a result, the degree of design freedom and the degree of arrangement freedom are increased with respect to the force applying members.

Preferably the other angular distances between each of the other adjacent pairs of the clutch pawls are equal to one another. With this bicycle freewheel, the strength is maintained in a well-balanced fashion and variation among the forces applied by the force applying members can be suppressed.

Preferably the clutch pawls and the ratchet teeth are configured and arranged such that the maximum number of the clutch pawls that simultaneously mesh with the ratchet teeth is one less than the total number of the clutch pawls. With this bicycle freewheel, the angle of lost motion can be reduced without increasing the original number of clutch pawls.

Preferably the maximum number of the clutch pawls that simultaneously mesh with the ratchet teeth is two. With this bicycle freewheel, the angle of lost motion can be reduced while ensuring sufficient rigidity.

Preferably the maximum number of the clutch pawls that simultaneously mesh with the ratchet teeth is one. With this bicycle freewheel, the angle of lost motion can be reduced as much as possible without increasing the original number of clutch pawls.

In accordance with a second aspect of the present invention, there is provided a bicycle hub comprising a hub axle configured and arranged to be fastened to a frame of a bicycle; a hub body rotatably supported around an outside circumference of the hub axle; and a bicycle freewheel in accordance with the first aspect of the invention.

With the present invention, since the force applying member is shaped like a circular ring and at least a portion thereof can elongate and contract in the circumferential direction, the clutch pawls can be urged toward their engagement positions using the elongation and contraction of the force applying member by arranging the force applying member such that the portion that elongates and contracts applies forces to the clutch pawls. Thus, each clutch pawl can be urged toward the engagement position individually by the elongation and contraction of the force applying member even if the clutch pawls are arranged close together. As a result, the limitations on the clutch pawl arrangement can be alleviated.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle that is equipped with a rear that includes a freewheel in accordance with a first embodiment of the present invention;
Figure 2 is a half-cross sectional view of the rear hub on which the freewheel is installed in accordance with the first embodiment of the present invention;
Figure 3 is an enlarged half-cross sectional view of the freewheel portion of the rear hub illustrated in Figure 2 in accordance with the first embodiment of the present invention;
Figure 4 is a transverse cross sectional view of the one-way clutch of the freewheel in accordance with the first embodiment of the present invention;
Figure 5 is an enlarged a side elevational view of a clutch pawl of the one-way clutch of the freewheel in accordance with the first embodiment of the present invention;
Figure 6 is a top plan view of the clutch pawl of the one-way clutch of the freewheel in accordance with the first embodiment of the present invention;
Figure 7 is a side elevational view of a force applying member (coil spring) for the one-way clutch in accordance with the first embodiment of the present invention;
Figure 8 is an axial elevational view, similar to Figure 7, of a one-way clutch for a bicycle freewheel in accordance with another embodiment of the present invention;
Figure 9 is an axial elevational view, similar to Figure 4, of a one-way clutch for a bicycle freewheel in accordance with still another embodiment of the present invention;
Figure 10 is an axial elevational view, similar to Figure 3, of a one-way clutch for a bicycle freewheel in accordance with still another embodiment of the present invention;
Figure 11 is a top plan view, similar to Figure 5, of a clutch pawl of the one-way clutch of the freewheel in accordance with the embodiment illustrated in Figure 10;
Figure 12 is an enlarged a side elevational view, similar to Figure 5, of a clutch pawl of the one-way clutch of the freewheel in accordance with still another embodiment of the present invention; and
Figure 13 is a top plan view, similar to Figure 6, of a clutch pawl of the one-way clutch of the freewheel in accordance with the embodiment illustrated in Figure 12.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

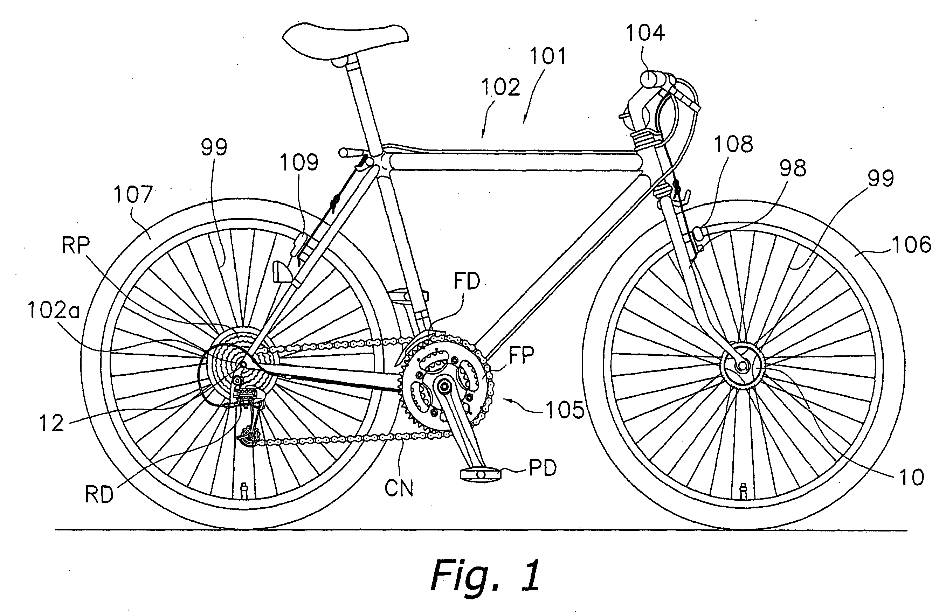

Referring initially to Figure 1, a bicycle 101 is illustrated that is equipped with a front hub 10 and a rear hub 12 in accordance with a first embodiment of the present invention. As seen in Figure 1, the bicycle 101 is arranged as a mountain bike.

The bicycle 101 includes a front fork 98, a diamond-shaped frame 102, a handle 104, a drive unit 105, and a pair of front and rear wheels 106 and 107. The frame 102 has the front fork 98 movably coupled thereto. The handle 104 is fixedly coupled to the front fork 98 to turn the front wheel 106. The drive unit 105 basically comprises a chain CN, a pair of pedals PD, a front derailleur FD, a rear derailleur RD, a plurality of front sprockets FP, a plurality of rear sprockets RP and other conventional parts. The front and rear wheels 106 and 107 are coupled to the front fork 98 and the rear portion of the frame 102. Each of the front and rear wheels 106 and 107 includes a plurality of spokes 99. Moreover, the front and rear wheels 106 and 107 are provided with a front brake 108 and rear brake 109, respectively. The front hub 10 is coupled to a center potion of the front wheel 106, and the rear hub 12 is coupled to a center portion of the rear wheel 107.

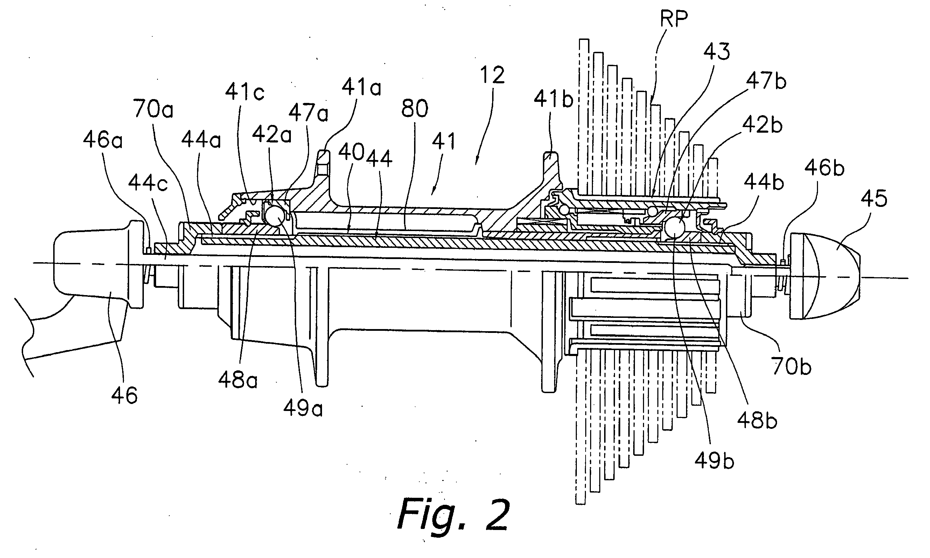

As shown in Figure 2, the rear hub 12 basically has a hub axle 40, a hub body or shell 41, a pair (first and second) of bearing assemblies 42a and 42b and a freewheel 43 in accordance with an embodiment of the present invention. The hub axle 40 is configured to be detachably mounted to a pair of left and right fork ends 102a (see Figure 1) provided on a rearward portion of the frame 102. The hub body 41 is arranged around the outside circumference of the hub axle 40. The freewheel 43 is coupled to the right-hand end of the hub body 41 (when viewed as shown in Figure 2), and has a rear sprocket cluster RP comprising, for example, 10 sprockets mounted thereon such that the sprocket cluster RP can rotate as an integral unit with the freewheel 43. The first and second bearing assemblies 42a and 42b are arranged between the hub axle 40 and the hub body 41 and between the hub axle 40 and the freewheel 43.

The hub axle 40 is a quick-release hub axle having a hollow axle main body 44 that has a right-hand (for example) external thread 44a arranged to span from a position slightly axially inward of the portion where the first bearing assembly 42a is installed to the axially outward end of the axle main body 44. The hollow axle main body 44 also has a right-hand external thread 44b that spans from a position slightly axially inward of the portion where the freewheel 43 is mounted to the axially outward end of the axle main body 44. The hub axle 40 also has a quick-release hub rod 44c, an adjustment nut 45 and a cam lever 46. The quick-release hub rod 44c is arranged so as to pass through the hollow axle main body 44. The adjustment nut 45 screws onto one end of the quick-release hub rod 44c. The cam lever 46 engages with the other end of the quick-release hub rod 44c. A first volute spring 46a is installed between one end (right-hand end in Figure 2) of the axle main body 44 and the adjustment nut 45. A second volute spring 46b is installed between the other end (left-hand end in Figure 2) of the axle main body 44 and the cam lever 46.

The hub body 41 is a generally cylindrical member made of, for example, an aluminum alloy. The hub body 41 has a pair of hub flanges 4 1 a and 4 1 b provided on both ends of the external circumference of the hub body 41. The hub flanges 41a and 41b are configured for connecting the spokes 99 thereto. A bearing installation section 41c is formed in one end face (left-hand end face in Figure 2) of the hub body 41. The bearing installation section 41c is configured for the first bearing assembly 42a to be installed therein. A grease holding member 80 is installed inside the hub body 41 for preventing grease from escaping from the first bearing assembly 42a.

The first bearing assembly 42a is a ball bearing that comprises a first outer race 47a, a first inner race 48a, and a plurality of spherical bodies (balls) 49a. The spherical bodies (balls) 49a are arranged between the two races 47a and 48a. Similarly, the second bearing assembly 42b is a ball bearing that comprises a second outer race 47b, a second inner race 48b, and a plurality of spherical bodies (balls) 49b. The spherical bodies (balls) 49b are arranged between the two races 47b and 48b. Each set of spherical balls 49a and 49b is held by a retainer (not shown) such that adjacent balls of each set maintain a prescribed circumferential spacing therebetween.

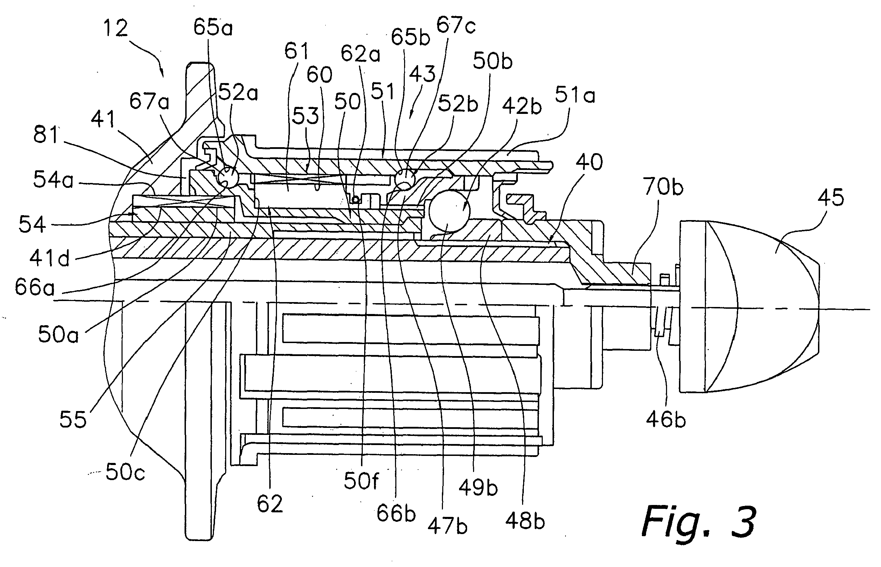

The first outer race 47a is press fitted into the bearing installation section 41c formed in the hub body 41. The second outer race 47b is screwed onto and, thereby, fastened to a bearing installation section 50b (see Figure 3) formed on an inner tubular member 50 (described later). The second outer race 47b also serves as the inner race of a fourth bearing assembly 52b (described later) that serves to support the freewheel 43 in a freely rotatable manner. The first and second inner races 48a and 48b are both screwed onto externally threaded sections 44a and 44b, respectively, that are formed on the axle main body 44 of the hub axle 40 and function as ball pushing members used to adjust the amount of axial play in the bearing assemblies 42a and 42b. Lock nuts 70a and 70b are arranged so as to contact the axially outward facing sides of the first and second inner races 48a and 48b, respectively, and serve to prevent the first and second inner races 48a and 48b from rotating and moving in the axial direction.

As shown in Figure 3, the freewheel 43 includes an inner tubular member 50, an outer tubular member 51, third and fourth bearing assemblies 52a and 52b and a pawl-type one-way clutch 53. The inner tubular member 50 is configured to be fixedly coupled to the hub body 41. The outer tubular member 51 is arranged around the outside circumference of the inner tubular member 50. The third and fourth bearing assemblies 52a and 52b are arranged between the inner tubular member 50 and the outer tubular member 51 and configured to couple the outer tubular member 51 to the inner tubular member 50 such that the outer tubular member 51 can rotate freely with respect to the inner tubular member 50. The pawl-type one-way clutch 53 is configured to transfer forward rotation of the outer tubular member 51 (i.e., rotation corresponding to forward movement of the bicycle) to the inner tubular member 50 and not transfer rearward rotation of the outer tubular member 51 to the inner tubular member 50.

The inner tubular member 50 is a step-shaped cylindrical member made of chromium-molybdenum steel or other comparatively high-strength steel material. The inner tubular member 50 is non-rotatably coupled with respect to the hub body 41 by a cylindrical coupling member 54 having serrations 54a formed on the external circumferential surface thereof. Serrations 50a and 41d configured to mesh with the serrations 54a of the coupling member 54 are provided on the internal surface of a larger diameter section of the left-hand end of the inner tubular member 50 (i.e., left-hand end as viewed in Figure 3) and the internal surface of the right-hand end of the hub body 41, respectively. The inner tubular member 50 is fastened to the hub body 41 with a cylindrical bolt 55 configured pass through the insides of the inner tubular member 50 and the coupling member 54 and screw into the internal surface of the hub body 41. A ball pushing surface 66a constituting the inner race of a third bearing assembly 52a is formed on the external circumferential surface of the larger diameter portion of the inner tubular member 50. The gap between the internal circumferential surface of the cylindrical bolt 55 and the external circumferential surface of the axle main body 44 is very small, e.g., 0.4 mm. A washer 81 is installed between the inner tubular member 50 and the hub body 41.

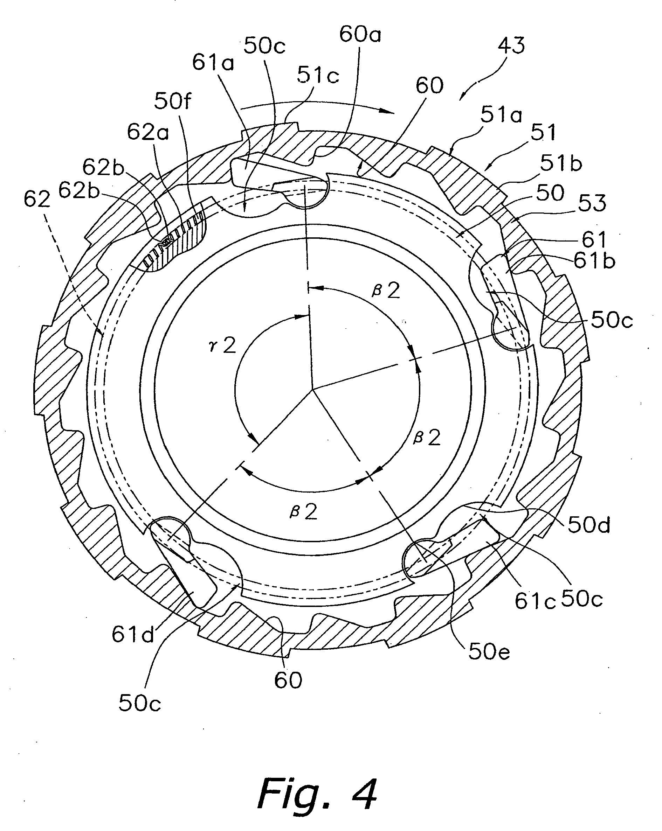

The bearing installation section 50b for installing the second bearing assembly 42b is formed on the external circumferential surface of the right-hand end of the inner tubular member 50 (i.e., the right-hand end when viewed as shown in Figure 3) for installing the second bearing assembly 42b. Clutch pawl installation recesses 50c are formed around a portion of the external circumferential surface of the inner tubular member 50 located further inward in the axial direction than the bearing installation section 50b. The clutch pawl installation recesses 50c are arranged so as to be spaced apart from one another along a circumferential direction and configured such that the four clutch pawls 61 (described later) of the one-way clutch 53 can be pivotally mounted therein. One spring arrangement groove 50f is also formed in the external circumferential surface of the inner tubular member 50. The spring arrangement groove 50f is configured to run in the circumferential direction and arranged to cross through the clutch pawl installation recesses 50c. As shown in Figure 4, each of the clutch pawl installation recesses 50c comprises two circular arc-shaped recessed sections 50d and 50e, one larger and one smaller, that are joined together. The smaller recessed section 50e is where the clutch pawl 61 is attached. The inner race of the third bearing assembly 52a is formed on the external circumferential surface of the larger diameter portion of the inner tubular member 50 located on the left-hand end of the inner tubular member 50 (i.e., left-hand end from the perspective of Figure 3) for supporting the outer tubular member 51 in a freely rotatable manner.

The outer tubular member 51 has a sprocket mounting part 51a configured for the rear sprocket cluster RP to be mounted on the external circumference thereof. The outer tubular member 51 is supported in a freely rotatable manner on the external circumference of the inner tubular member 50. As shown in Figure 4, the sprocket mounting part 51a comprises, for example, nine protrusions 51b. One of the protrusions 51c has a smaller width (i.e., dimension in the circumferential direction) than the other protrusions 51b. The outer tubular member 51 is supported in a freely rotatable manner on the inner tubular member 50 by the third and fourth bearing assemblies 52a and 52b. The ball bearing surfaces 65a and 65b that serve as the outer races for the third and fourth bearing assemblies 52a and 52b, respectively, are formed on the internal circumferential surface of the outer tubular member 51 and arranged so as to be spaced apart from each other in the axial direction. The ratchet teeth 60 of the one-way clutch 53 are provided between the ball bearing surfaces 65a and 65b.

The third and fourth bearing assemblies 52a and 52b are arranged between the inner tubular member 50 and the outer tubular member 51 and serve to mount the outer tubular member 51 onto the inner tubular member 50 such that the outer tubular member 51 can rotate freely with respect to the inner tubular member 50. The third bearing assembly 52a is a ball bearing that comprises the ball bearing surface 65a, the ball pushing surface 66a and a plurality of spherical bodies (balls) 67a. The ball bearing surface 65a is formed on the internal circumferential surface of the outer tubular member 51 and serves as an outer race. The ball pushing surface 66a is formed on the external circumferential surface of the inner tubular member 50 and serves as an inner race. The spherical bodies (balls) 67a are arranged between the ball bearing surface 65a and the ball pushing surface 66a. Likewise, the fourth bearing assembly 52b is a ball bearing that comprises the ball bearing surface 65b, the ball pushing surface 66b and a plurality of spherical bodies (balls) 67b. The ball bearing surface 65b is formed on the internal circumferential surface of the outer tubular member 51 and serves as an outer race. The ball pushing surface 66b is formed on the external circumferential surface of the outer race 47b of the second bearing assembly 42b and serves as an inner race. The spherical bodies (balls) 67b are arranged between the ball bearing surface 65b and the ball pushing surface 66b. Each set of spherical balls 67a and 67b is held by a retainer (not shown) such that adjacent balls of each set maintain a prescribed circumferential spacing therebetween.

The one-way clutch 53 serves to transfer only forward rotation of the outer tubular member 51 to the inner tubular member 50. As shown in Figure 4, the one-way clutch 53 includes the ratchet teeth 60, the first to nth (where n is an integer equal to or larger than 3) clutch pawls 61 and a force applying member 62. The ratchet teeth 60 are provided on the internal circumferential surface of the outer tubular member 51. The clutch pawls 61 are arranged on the external circumferential surface of the inner tubular member 50 in such a manner as to be spaced apart from each other along a circumferential direction. The force applying member 62 preferably includes two spring members 62a and 62b that are configured and arranged to apply forces against the clutch pawls 61. The one-way clutch 53 is provided for the purpose of transferring rotation from the outer tubular member 51 to the inner tubular member 50 only when the outer tubular member 51 rotates in the forward direction indicated by an arrow in Figure 4 (i.e., the clockwise direction in Figure 4). Thus, if the inner tubular member 50 rotates in the clockwise direction (i.e., the clockwise direction from the perspective of Figure 4) relative to the outer tubular member 51, the rotation of the inner tubular member 50 will not be transferred to the outer tubular member 51.

The ratchet teeth 60 are arranged on the portion of the internal surface of the outer tubular member 51 that is located between the third and fourth bearing assemblies 52a and 52b. The ratchet teeth 60 are arranged so as to be spaced apart from one another along a circumferential direction. In the embodiment shown in Figure 4, for example, there are eighteen of the ratchet teeth 60 with each of the ratchet teeth 60 being shaped like a saw tooth that is asymmetrical in the circumferential direction and has a wall-like section 60a. Therefore, in this embodiment, adjacent ratchet teeth 60 are separated by an angular distance α of 20°.

In this embodiment, there are four of the clutch pawls 61 arranged to be spaced apart from one another along a circumferential direction. To facilitate explaining the arrangement of the clutch pawls 61, the first to fourth clutch pawls 61 are numbered 61a, 61b, 61c, and 61d and arranged in the clockwise direction in Figure 4. Each of the clutch pawls 61 is mounted in a clutch pawl installation recess 50c of the inner tubular member 50 in such a fashion that it can pivot freely between an engagement position where it engages with one of the ratchet teeth 60 and a disengagement position where it does not engage with the ratchet teeth 60. When the clutch pawls 61 are in the engagement position, torque can be transferred from the outer tubular member 51 to the inner tubular member 50. The first to fourth clutch pawls 61a to 61d are arranged such that the angle of lost motion is 5°.

In order to achieve this angle of lost motion, the clutch pawls 61 are arranged such that the angular distance β2 between the first and second clutch pawls 61a and 61b, the second and third clutch pawls 61b and 61c, and the third and fourth clutch pawls 61c and 61d is smaller than the angular distance γ2 between the first and fourth clutch pawls 61a and 61d (the angular distance γ2 is measured on the opposite side where the second and third clutch pawls 61b and 61c are not located, i.e., all angular distances are measured the direction in which no other clutch pawls exist between the two clutch pawls whose angular distance is being measured). More specifically, in this embodiment, the angular distances β2 between the adjacent pairs of clutch pawls 61a and 61b, 61b and 61c, and 61c and 61d are all 75° and the angular distance γ2 between the first and fourth clutch pawls 61a and 61d is 135°.

By arranging the first to fourth clutch pawls 61a to 61d in this way, only one of the first to fourth clutch pawls 61a to 61d meshes with the ratchet teeth 60 at a time.
More specifically, since the angular distance β2 between each of the adjacent pairs of the clutch pawls 61a and 61b, 61b and 61c, and 61c and 61d is 75°, there are no two of the clutch pawls 61 that are separated by an angular distance that is evenly divisible by 20°. Consequently, when one clutch pawl 61 meshes with one of the ratchet teeth 60, all of the other clutch pawls 61 are out of phase with respect to the ratchet teeth 60. Furthermore, since the angular distance β2 is 75°, when the first clutch pawl 61a is meshed with one of the ratchet teeth 60, the second to fourth clutch pawls 61b to 61d are arranged so as to be successively closer in 5° increments to meshing with the ratchet tooth 60 that is nearest in the counterclockwise direction. Consequently, the angle of lost motion is 5°. With this bicycle freewheel, since only one clutch pawl 61 meshes with the ratchet teeth 60 at a time, the angle of lost motion can be reduced as much as possible without increasing the original number of clutch pawls 61.

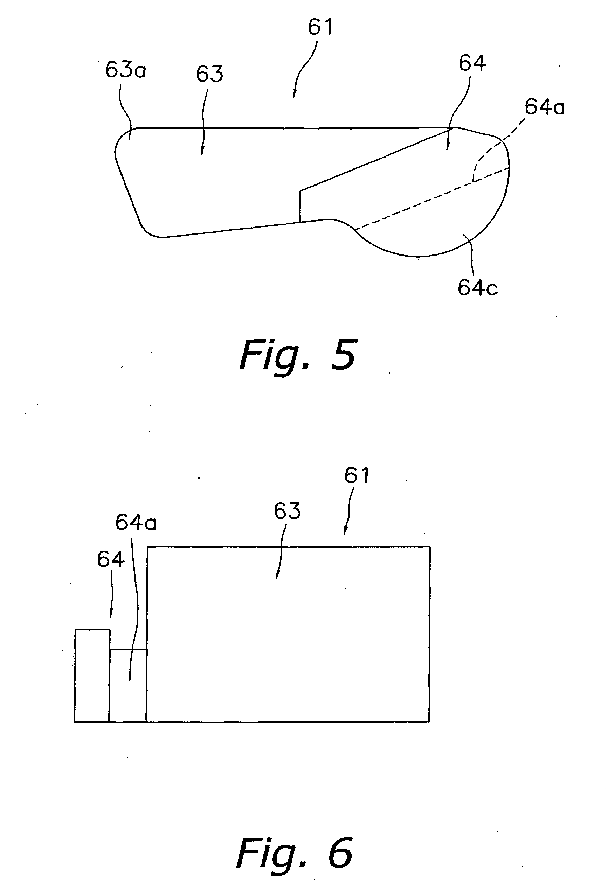

As shown in Figures 5 and 6, each of the clutch pawls 61 has a claw-like part 63 whose tip end portion is configured to mesh with one of the ratchet teeth 60 and a spring engaging part 64 that is formed integrally on a long side of the claw-like part 63. The base end portion 64c of the claw-like part 63 and the spring engaging part 64 is shaped like a circular arc and configured to be mounted in the smaller-diameter recessed section 50e of the clutch pawl installation recess 50c in such a fashion that the clutch pawl 61 can pivot freely. The claw-like part 63 has a tip end section 63a configured to abut against the wall-like section 60a of one of the ratchet teeth 60. A spring engaging groove 64a configured to engage with one of the spring members 62a and 62b of the force applying member 62 is formed in the spring engaging part 64. The spring engaging groove 64a is configured to slant upward to the right when viewed as shown in Figure 5. This configuration enables the clutch pawl 61 to stand up in the engagement position when the force applying member engages with the spring engaging groove 64a. The spring engaging groove 64a is configured such that it can be aligned with the spring arrangement groove 50f along the circumferential direction when the clutch pawl 61 is mounted in the clutch pawl installation recess 50c. The spring engaging part 64 is formed integrally on one side (left side in Figure 6).

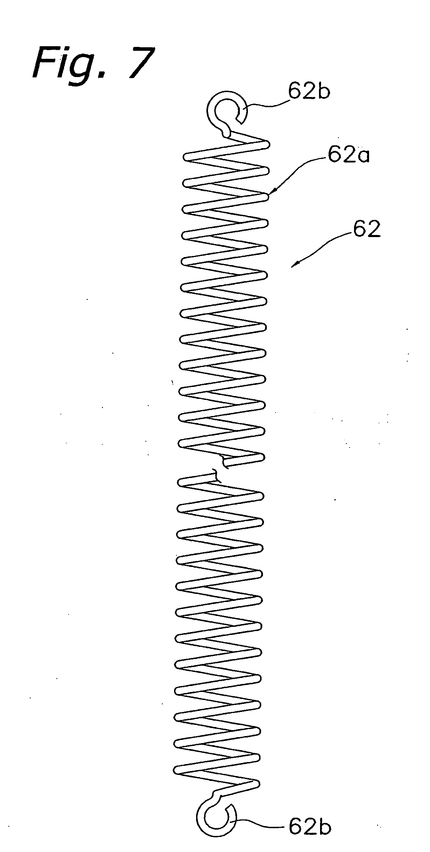

The force applying member 62 includes a coil spring 62a configured and arranged to spring load the first to fourth clutch pawls 61a to 61d simultaneously in a direction oriented away from the external circumference of the inner tubular member 50 and toward the engagement position. As shown in Figure 7, the coil spring 62a has a circular hook 62b provided on each of both ends thereof. The hooks 62b can be connected together such that the coil spring 62a can be installed into the circular spring arrangement groove 50f in the form of a circular ring. The length of the coil spring 62a is set such that the coil spring 62a is elongated beyond its natural length when it is installed in the spring arrangement groove 50f with the hooks 62b hooked together. More specifically, the coil spring 62a is configured such that its natural length (i.e., length with no load applied) is equal to or shorter than the circumference of the bottom surface of the spring arrangement groove 50f. Consequently, the coil spring 62a contacts the bottom surfaces of the spring engaging grooves 64a (see Figure 5) and the clutch pawls 61 are spring loaded in such a direction as to urge them to stand up in the engagement position.

The operation of the freewheel 43 will now be described. When a rider pedals the pedals PD and rotates the rear sprocket cluster RP, the outer tubular member 51 rotates together with the rear sprocket cluster RP and two of the clutch pawls 61 of the one-way clutch 53 mesh with two of the ratchet teeth 60 of the one-way clutch 53. Since the angle of lost motion is 5°, the outer tubular member 51 will rotate not more than a maximum of 5° before two of the clutch pawls 61 mesh with the ratchet teeth 60 and the rotation of the outer tubular member 51 is transferred to the inner tubular member 50, thereby causing the wheel to rotate. Meanwhile, if the rider stops pedaling the pedals PD, the inner tubular member 50 will rotate relative to the outer tubular member 51 in the direction depicted as the clockwise direction in Figure 4 because the rear wheel 107 is rotating. Clockwise rotation of the inner tubular member 50 is not transferred to the outer tubular member 51 because it acts to move the clutch pawls 61 relative to the ratchet teeth 60 in such a direction that the ratchet teeth 60 push the clutch pawls 61 downward toward the disengaged position.

Since the force applying member 62 used to urge the clutch pawls 61 toward the engagement position is a coil spring 62a that is shaped like a circular ring and capable of elongating and contracting in the circumferential direction, the portion that elongates and contracts applies forces to the clutch pawls 61 and thereby spring loads the clutch pawls 61 toward the engagement position by means of its elongation and contraction. Thus, each clutch pawl 61 can be urged toward the engagement position individually and in a stable manner by the elongation and contraction of the coil spring 62a even if the clutch pawls 61 are arranged close together. As a result, the limitations on the arrangement of the clutch pawls 61 can be alleviated.

A typical assembly procedure for the freewheel 43 will now be described. First, the spherical balls 67a of the third bearing assembly 52a, which are held by a retainer, are arranged on the ball pushing surface 66a of the inner tubular member 50. Next, the clutch pawls 61 are mounted in the smaller circular arc-shaped recessed sections 50e of the clutch pawl installation recesses 50c. The coil spring 62a is installed by hooking the hooks 62b together such that the coil spring 62a assumes the shape of a circular ring and placing the coil spring 62a into the spring arrangement groove 50f from the end of the inner tubular member 50 depicted as the right-hand end in Figure 3. Thus, the four clutch pawls 61a to 61d are spring loaded toward the engagement position by the coil spring 62a.

After the spherical balls 67a, the clutch pawls 61, and the coil spring 62a have be installed onto the external circumference of the inner tubular member 50 as described above, the inner tubular member 50 is inserted into the outer tubular member 51 from the end depicted as the left-hand end in Figure 3. During the insertion, it is preferable to align the two member members 50 and 51 such that one of the clutch pawls 61 meshes with one of the ratchet teeth 60. After inserting the inner tubular member 50, the spherical balls 67b are mounted to the ball pushing surface 66b of the outer race 47b of the second bearing assembly 42b, and the outer race 47b is screwed onto the external circumferential surface of the inner tubular member 50. The pressure exerted against the balls 67a and 67b of the third and fourth bearing assemblies 52a and 52b is adjusted by the degree to which the outer race 47b is tightened. The installation of the outer race 47b completes the assembly of the freewheel 43. The freewheel 43 is then fastened to the hub body 41 with the washer 81 disposed therebetween. More specifically, first the washer 81 is mounted to the hub body 41 and then the freewheel 43 is coupled non-rotatably to the hub body 41 by mounting it onto the coupling member 54 such that the freewheel 43 abuts against the washer 81. Finally, the freewheel 43 is fastened to the hub body 41 with the cylindrical bolt 55.

Since a separate coil spring 62a is not provide for each clutch pawl 61 but, instead, a plurality of clutch pawls 61 are spring loaded simultaneously (together) with only the coil spring 62a, the internal structure of the freewheel 43 is prevented from becoming complex and the force applying member 62 can be installed more easily during the assembly process of the freewheel 43.

Since the force applying member 62 constitutes the coil spring 62a that is shaped like a circular ring and capable of elongating and contracting in the circumferential direction, the clutch pawls 61 can be urged toward their engagement positions using the elongation and contraction of the coil spring 62a by arranging the coil spring 62a such that the portion that elongates and contracts applies forces to the clutch pawls 61. Thus, each of the clutch pawls 61 can be urged toward the engagement position individually by the elongation and contraction of the coil spring 62a even if the clutch pawls 61 are arranged close together. As a result, the limitations on the arrangement of the clutch pawls 61 can be alleviated.

### OTHER EMBODIMENTS

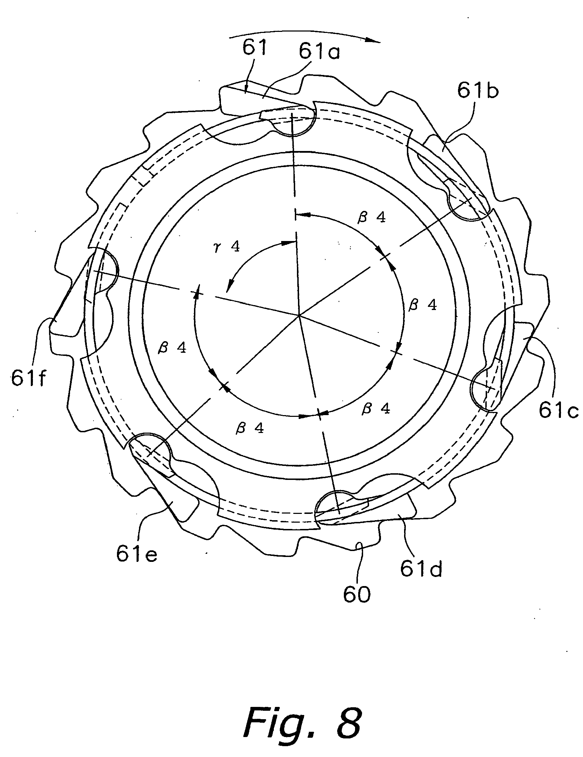

Other embodiments will now be explained with reference to Figures 8-13. In view of the similarity between the embodiments, the parts of the embodiments that are identical to the parts of the first embodiment will be given the same reference numerals as the parts of the first embodiment. Moreover, the descriptions of the parts of the embodiments that are identical to the parts of the first embodiment may be omitted for the sake of brevity.

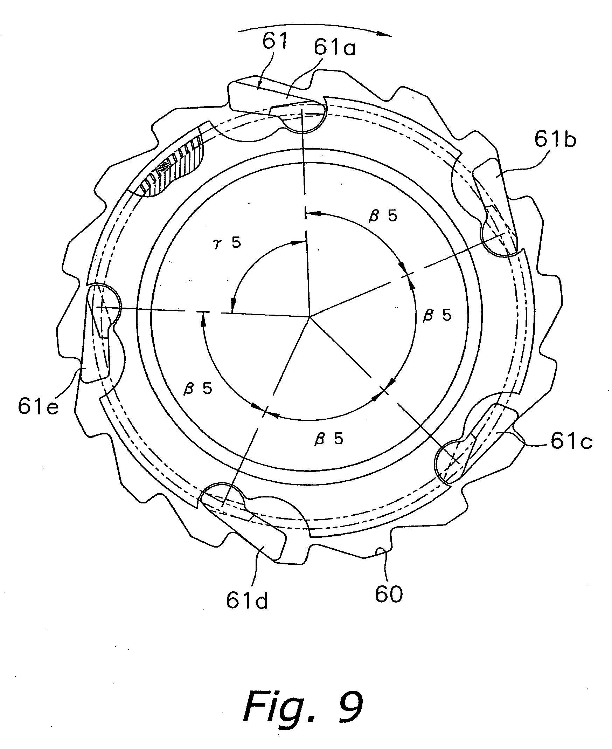

Although the previously described embodiments have four of the clutch pawls 61, the number of the clutch pawls 61 can be any number equal to or larger than 3. Figure 8 shows an embodiment in which there are six of the clutch pawls 61 indicated with the reference numerals 61a to 61f, while Figure 9 shows an embodiment in which there are five of the clutch pawls 61 indicated with the reference numerals 61a to 61e.

Figure 8 shows an embodiment in which the clutch pawls 61 are arranged such that the angular distance β4 between each of the adjacent pairs of the clutch pawls 61a and 61b, 61b and 61c, and 61c and 61d, 61d and 61e, and 61e and 61f is 56°40' and the angular distance γ4 between the first and sixth of the clutch pawls 61a and 61f is 76°40' (the angular distance γ4 is measured on the opposite side where the second to fifth of the clutch pawls 61b to 61e are not located, i.e., all angular distances are measured the direction in which none of other of the clutch pawls exist between the two clutch pawls whose angular distance is being measured).

With this arrangement of the first to sixth of the clutch pawls 61a to 61f, only one of the first to sixth of the clutch pawls 61a to 61f meshes with one of the ratchet teeth 60 at a time. More specifically, since the angular distance β4 between each of the adjacent pairs of the clutch pawls 61a and 61b, 61b and 61c, 61c and 61d, 61d and 61e, and 61e and 61f is 56°40', there are no two of the clutch pawls 61 that are separated by an angular distance that is evenly divisible by 20°. Consequently, when one of the clutch pawl 61 meshes with one of the ratchet teeth 60, all of the other of the clutch pawls 61 are out of phase with respect to the ratchet teeth 60. Furthermore, since the angular distance β4 is 56°40', when the first of the clutch pawl 61a is meshed with one of the ratchet teeth 60, the second to sixth of the clutch pawls 61b to 61f are arranged so as to be positioned successively closer in 3°20' increments to meshing with one of the ratchet teeth 60 that is nearest in the counterclockwise direction. Consequently, the angle of lost motion is 3°20'. With this bicycle freewheel, since only one of the clutch pawls 61 meshes with one of the ratchet teeth 60 at a time, the angle of lost motion can be reduced as much as possible without increasing the number of the clutch pawls.

In the embodiment shown in Figure 9, the angular distance β5 between each of the adjacent pairs of the clutch pawls 61a and 61b, 61b and 61c, and 61c and 61d, and 61d and 61e is 68° and the angular distance γ5 between the first and fifth of the clutch pawls 61a and 61e is 88°.

With this arrangement of the first to fifth of the clutch pawls 61a to 61e, only one of the first to fifth of the clutch pawls 61a to 61e meshes with one of the ratchet teeth 60 at a time. More specifically, since the angular distance β5 between each of the adjacent pairs of the clutch pawls 61a and 61b, 61b and 61c, 61c and 61d, and 61d and 61e is 68°, there are no two of the clutch pawls 61 that are separated by an angular distance that is evenly divisible by 20°. Consequently, when one of the clutch pawls 61 meshes with one of the ratchet teeth 60, all of the other of the clutch pawls 61 are out of phase with respect to the ratchet teeth 60. Furthermore, since the angular distance β5 is 68°, when the clutch pawl 61a is meshed with one of the ratchet teeth 60, the clutch pawls 61b to 61e are arranged such that the angular distance between each of the clutch pawls 61b to 61e and the respective one of the ratchet teeth 60 that is nearest in, for example, the counterclockwise direction varies in 4° increments. More specifically, when the first clutch pawl 61a meshes with one of the ratchet teeth 60, the fourth clutch pawl 61d is positioned 4° away from the nearest one of the ratchet teeth 60 (in the counterclockwise direction from pawl to tooth), the second clutch pawl 61b is positioned 8° away from the nearest one of the ratchet teeth 60, the fifth clutch pawl 61e is positioned 12° away from the nearest one of the ratchet teeth 60, and the third clutch pawl 61c is positioned 16° away from the nearest one of the ratchet teeth 60. Consequently, the angle of lost motion is 4°. With this bicycle freewheel, since only one of the clutch pawls 61 meshes with one of the ratchet teeth 60 at a time, the angle of lost motion can be reduced as much as possible without increasing the number of clutch pawls. It is also possible to obtain an angle of lost motion equal to 4° by setting both of the angular distances β5 and γ5 to 72° such that the first to fifth of the clutch pawls 61a to 61e are all equally spaced apart.

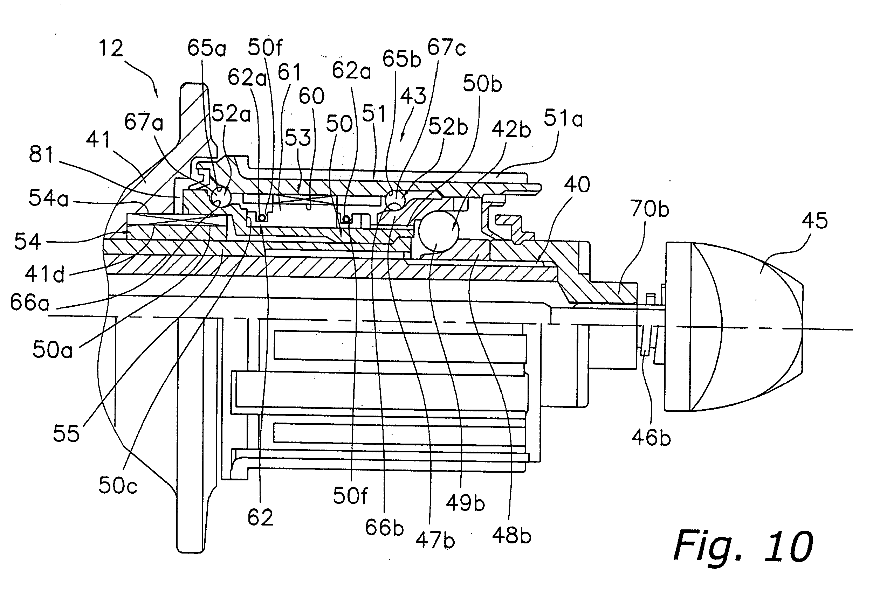

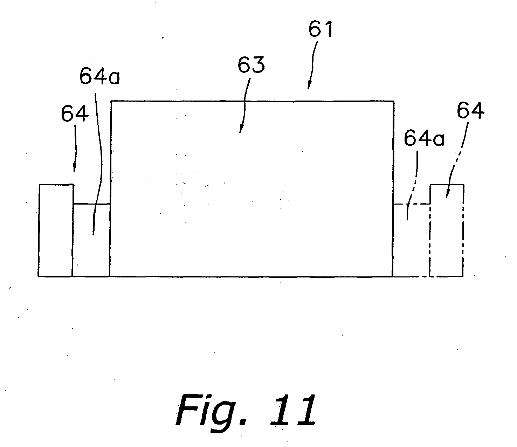

Although in the previously described embodiment all of the clutch pawls 61 are spring loaded using one coil spring 62a, it is acceptable to use two coil springs. Figures 10 and 11 illustrate such an embodiment. In this embodiment, two coil springs 62a and 62a are arranged such that alternate clutch pawls 61 are spring loaded by a different one of the two coil springs 62a or 62a (i.e., the coil spring 62a that spring loads each clutch pawl 61 alternates as one moves from the first clutch pawl to the nth clutch pawl). As shown in Figure 10, two spring arrangement grooves 50f are provided in such a fashion as to be spaced apart from each other along the axial direction. The spring engaging groove 64a of each clutch pawl is configured such that it can be aligned with one or the other of the two spring arrangement grooves 50f along the circumferential direction when the clutch pawl 61 is mounted in the clutch pawl installation recess 50c. As shown in Figure 11, the spring engaging part 64 of each of the clutch pawl 61 is formed integrally on one side (left side in Figure 11) or the other side (right side in Figure 11) of the claw-like part 63 and the two spring arrangement grooves 50f are formed in such positions that they are aligned along the circumferential direction with the spring engaging grooves 64a of the spring engaging parts 64 of the clutch pawls 61. The clutch pawls 61 are arranged such that each of the clutch pawls 61 has the spring engaging part 64 provided on the one side and alternate ones of the clutch pawls 61 have the spring engaging part 64 provided on the other side in an alternating fashion.

Thus, by spring loading alternate ones of the clutch pawls 61 with a different one of the two coil springs 62a and 62b, respectively, the clutch pawls 61 spring loaded by the coil springs 62a and 62b can be divided into two groups. Consequently, the coil springs can apply stable forces to the clutch pawls 61 even when the number of clutch pawls 61 is large. As a result, the plurality of clutch pawls 61 can be urged toward the engagement position in an even more stable manner.

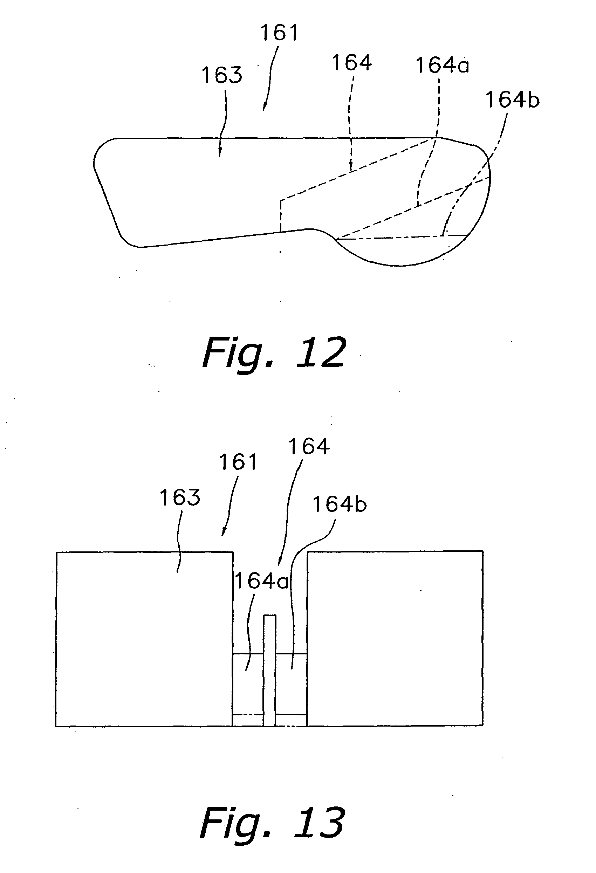

Although in the previously described embodiment the spring engaging part 64 of each clutch pawl 61 is arranged on a side portion of the claw-like part 63 of the clutch pawl 61, the invention is not limited to such an arrangement of the spring engagement parts. Figures 12 and 13 show another embodiment in which the spring engaging part 164 is arranged in a middle portion along the lengthwise direction (horizontal direction in Figure 13) of the claw-like part 163 of the clutch pawl 161.

In this embodiment, two spring engaging grooves 164a are arranged in a middle portion of the claw-like part 163 in such a fashion as to be spaced apart from each other along the axial direction and configured such that alternate clutch pawls 161 are spring loaded by a different one of two force applying members of the prior embodiment. Two spring arrangement grooves 50f are formed in the inner tubular member 50 so as to be spaced apart from each other along the axial direction. The spacing between the spring arrangement grooves 50f is such that the two spring arrangement grooves 50f can be aligned along the circumferential direction with the two spring engaging grooves 164a, respectively, of each of the clutch pawls 161. The spring engaging groove 164a indicated with a broken line is configured to slant upward to the right when viewed as shown in Figure 12. This configuration enables the clutch pawl 161 to be spring loaded toward the engagement position in the same manner as in the previously described embodiment by one of the coil springs 62a and 62b. Meanwhile, the other spring engaging groove 164b indicated with a double-dot chain line is configured to be approximately horizontal when viewed as shown in Figure 12 so that the clutch pawl 161 is not spring loaded by the other of the two coil springs 62a and 62b. In this embodiment, clutch pawls 161 having spring the engagement grooves 164a and 164b configured as indicated with the solid lines in Figure 13 and of the clutch pawls 161 having the spring engagement grooves 164a and 164b reversed as indicated with the double-dot chain lines in Figure 13 are arranged in an alternating fashion. As a result, alternate ones of the clutch pawls 161 are spring loaded by two spring members 62a and 62b, respectively. It is also acceptable to provide only one spring engaging part 164 in a middle portion.

Although in the previously described embodiment the coil spring 62a used as the force applying member is configured to have a coiled form along its entire length, it is acceptable to use a force applying member that is an annular member of which only a portion has a coiled form (or only a portion is made of an elastic member). It is also acceptable to use a force applying member that is made entirely of an elastic member, such as an O-ring.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle freewheel (43) comprising:
an inner tubular member (50) configured to be couplable to a bicycle hub (12);
an outer tubular member arranged around an outer side circumference of the inner tubular member (50);
at least one bearing assembly (52a) disposed between the inner tubular member (50) and the outer tubular member (51) to couple the outer tubular member (51) to the inner tubular member (50) in a rotatable manner such that the outer tubular member (51) is freely rotatable with respect to the inner tubular member (50); and
a one-way clutch (53) including a plurality of ratchet teeth (60) provided on an internal circumferential surface of the outer tubular member (51), at least three clutch pawls (61) circumferentially spaced apart around the outer side circumference of the inner tubular member (50) and each freely movable between an engagement position in which the clutch pawls (61) engage the ratchet teeth (60) to transmit torque from the outer tubular member (51) to the inner tubular member (50) and a disengagement position in which the clutch pawls (61) are disengaged from the ratchet teeth (60), and at least one force applying member (62) operable to simultaneously apply a force against at least a portion of the clutch pawls (61) in such directions as to urge the clutch pawls (61) toward the engagement positions, the at least one force applying member (62) comprising a closed circular ring-shaped member than runs in a circumferential direction of the inner tubular member (50) such that at least a portion of the at least one force applying member (62) elongates and contracts in the circumferential direction during movement of the clutch pawls (61) and the clutch pawls (61) being arranged such that an angle of lost motion of the freewheel (43) is 5° or less.

2. The bicycle freewheel (43) as recited in claim 1, wherein
the force applying member (62) is an elastic member that elongates and contracts in the circumferential direction along substantially all portions of the elastic member during movement of the clutch pawls (61).

3. The bicycle freewheel (43) as recited in claim 2, wherein
the elastic member is a coil spring (62a) mounted along the circumferential direction with both ends being connected together.

4. The bicycle freewheel (43) as recited in any preceding claim, wherein
the at least one force applying member (62) includes a first force applying member (62a) and a second force applying member (62b), with the first and second force applying members being arranged to apply forces to alternate ones of the clutch pawls (61), respectively.

5. The bicycle freewheel (43) as recited in claim 4, wherein
each of the clutch pawls (61) includes a claw-like part (63) configured to selectively mesh with the ratchet teeth (60), and a spring engaging part (64) arranged on a side of the claw-like part (63) and engageable with one of the first and second force applying members, with the spring engaging parts (64) of adjacent ones of the clutch pawls being provided on opposite sides of respective ones of the claw-like parts (63).

6. The bicycle freewheel (43) as recited in any preceding claim, wherein
two adjacent clutch pawls (61) are angularly spaced apart by a first angular distance γ2 that is larger than other angular distances β2 between any other adjacent pair of the clutch pawls (61).

7. The bicycle freewheel (43) as recited in claim 6, wherein
the other angular distances β2 between each of the other adjacent pairs of the clutch pawls (61) are equal to one another.

8. The bicycle freewheel (43) as recited in any preceding claim, wherein
the clutch pawls (61) and the ratchet teeth (60) are configured and arranged such that the maximum number of the clutch pawls (61) that simultaneously mesh with the ratchet teeth (60) is one less than the total number of the clutch pawls (61).

9. The bicycle freewheel (43) as recited in any preceding claim, wherein
the maximum number of the clutch pawls (61) that simultaneously mesh with the ratchet teeth (60) is two.

10. The bicycle freewheel (43) as recited in any of claims 1 to 8, wherein
the maximum number of the clutch pawls (61) that simultaneously mesh with the ratchet teeth (60) is one.

11. A bicycle hub (12) comprising:
a hub axle (40) configured and arranged to be fastened to a frame (102) of a bicycle (101);
a hub body (41) rotatably supported around an outside circumference of the hub axle (40); and
a bicycle freewheel (43) as recited in any preceding claim.
